# FASCICULE DE BREVET EUROPEEN

(11) **EP 3 555 899 B1**
(45) Date de publication et mention de la délivrance du brevet: **15.04.2020**
(21) Numéro de dépôt: 17822005.9
(22) Date de dépôt: 14.12.2017
(51) Int. Cl.: H01H 9/12, H01H 9/54, H01H 47/00, H01H 50/04

(54) **CONTACTEUR ÉLECTRIQUE DE PUISSANCE ET VÉHICULE COMPORTANT UN TEL CONTACTEUR**
STROMKONTAKTOR UND FAHRZEUG MIT SOLCH EINEM KONTAKTOR
ELECTRICAL POWER CONTACTOR AND VEHICLE COMPRISING SUCH A CONTACTOR

(30) Priorité: 16.12.2016 FR 1662604
(43) Date de publication de la demande: 23.10.2019
(73) Titulaire: AIRBUS (SAS), 31700 Blagnac (FR); Voltair, 92150 Suresnes (FR)
(72) Inventeur: MAROT, Christian, 31400 Toulouse (FR); NGUYEN, Phi Hung, 94600 Choisi le Roi (FR)
(74) Mandataire: Gicquel, Olivier Yves Gérard
(86) Numéro de dépôt international: PCT/FR2017/053578
(87) Numéro de publication internationale: WO 2018/109404

(56) Documents cités:
- DE-A1- 2 103 292
- FR-A1- 2 820 900
- FR-A1- 2 952 131
- US-A- 2 821 666

## Description

### DOMAINE TECHNIQUE

L'invention appartient au domaine des réseaux de distribution des alimentations de puissance.

Plus particulièrement, l'invention appartient au domaine de la distribution de puissance électrique embarquée dans les véhicules.

Plus particulièrement, l'invention concerne un contacteur électrique de puissance, par exemple un contacteur utilisé dans un aéronef.

### ETAT DE L'ART

Dans les réseaux de distribution électrique des véhicules, le retour des courants portés par les phases ou le positif de l'alimentation est généralement réalisé par un conducteur séparé dédié, neutre ou potentiel de référence à l'alimentation, de manière distincte par rapport à la masse électrique de la structure du véhicule.

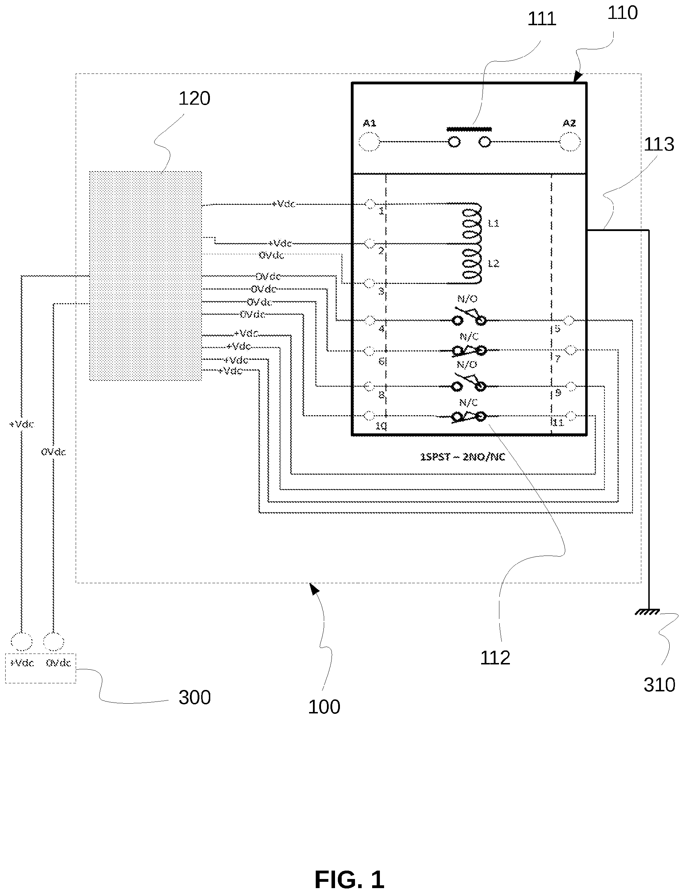

Cette configuration illustrée dans l'exemple d'installation d'un contacteur 100 illustré sur la Figure 1 est utilisé en particulier lorsque les qualités exigées pour les circuits d'alimentation des équipements sont incompatibles avec un retour nominal de courant par la structure du véhicule utilisée comme masse électrique.

Elle s'impose également lorsque la continuité électrique de la structure n'est pas assurée avec une résistance suffisamment faible, ce qui est constaté sur les structures résultant de l'assemblage de nombreuses pièces métalliques, par exemple les aéronefs à structure métallique, ou pour les aéronefs récents avec l'utilisation croissante de structures non conductrices, ou inadaptées à la conduction électrique, comme par exemple les structures en matériaux composites.

Une telle configuration implique un nombre important d'interfaces composant/composant et composant/système, entraînant une complexité et un poids de câblage ainsi que des risques de couplage électromagnétique dus aux boucles de courant radiofréquences rayonnantes.

La problématique du poids est essentielle en aéronautique. Par ailleurs, il convient de limiter autant que possible tout dysfonctionnement des systèmes embarqués qui serait imputable aux couplages électromagnétiques entre les éléments du système.

L'invention propose un contacteur électrique de puissance diminuant la complexité du câblage interne, permettant ainsi de limiter les conséquences inférentes à la problématique mentionnée plus haut et d'améliorer la fiabilité de l'installation.

Le document FR 2 820 900 A1 divulgue un contacteur électrique de puissance selon le préambule de la revendication 1.

### EXPOSE DE L'INVENTION

L'invention concerne un contacteur électrique de puissance destiné à être connecté à une alimentation électrique en courant continu entretenant une différence de potentiel entre une borne à un potentiel Vdc et une borne à un potentiel de référence 0Vdc. Le contacteur électrique de puissance selon l'invention comporte :
- au moins une bobine agencée pour actionner au moins un contact de puissance ; et
- au moins un contrôleur alimentant l'au moins une bobine par une tension +Vdc fournie par l'alimentation électrique ; et
- au moins un contact auxiliaire actionné par l'au moins une bobine, une borne de l'au moins un contact auxiliaire étant reliée à une entrée du contrôleur pour définir une tension sur l'entrée.

L'au moins un contact de puissance, l'au moins une bobine et l'au moins un contact auxiliaire sont renfermés dans un boîtier mécanique.

Le contacteur électrique de puissance comporte en outre un plan de masse électrique local destiné à être relié électriquement au potentiel de référence OVdc de l'alimentation électrique et à une masse électrique extérieure au contacteur électrique de puissance.

Des retours de courant de l'au moins une bobine et de l'au moins un contact auxiliaire sont réalisés par un conducteur commun relié au plan de masse électrique local.

Un retour de courant de l'au moins un contrôleur est relié au plan de masse électrique local.

Dans une forme de réalisation, le boîtier mécanique est relié au plan de masse électrique local par un conducteur indépendant.

Dans une forme de réalisation, le boîtier mécanique est relié au plan de masse électrique local par le conducteur commun reliant les retours de courant de l'au moins une bobine et de l'au moins un contact auxiliaire audit plan de masse électrique local.

Dans une forme de réalisation, une distance du plan de masse électrique local à l'au moins un contrôleur et une distance du plan de masse électrique local à un boîtier mécanique comprenant les éléments de commutation est inférieure ou égale à 30cm.

Dans une forme de réalisation, la résistance entre deux points quelconques du plan de mass électrique local est inférieure à 10µΩ, de préférence à 2µΩ.

Dans une forme de réalisation, le plan de masse électrique local est une plaque rectangulaire d'un matériau de résistivité inférieure ou égale à 10⁻⁶ Ω.m, d'épaisseur e supérieure ou égale à 0,10mm, de préférence égale à 0,5mm, et dont le rapport ℓ/L d'une largeur ℓ de plaque sur une longueur L de plaque est supérieur ou égal à 2/3 et inférieur ou égal à 1.

Dans une forme de réalisation, le plan de masse électrique local a une forme sensiblement carrée.

L'invention concerne également un aéronef comportant au moins un contacteur électrique de puissance selon l'invention.

Dans une forme de réalisation, l'aéronef comporte en outre un plan de masse électrique général en charge des retours de courant de l'aéronef et auquel le plan de masse électrique local de l'au moins un contacteur de puissance est relié.

### BREVE DESCRIPTION DES FIGURES

L'invention sera mieux comprise à la lecture de la description qui suit et à l'examen des figures qui l'accompagnent. Celles-ci ne sont présentées qu'à titre indicatif et nullement limitatif de l'invention.
La Figure 1 déjà citée représente un contacteur de puissance de l'art antérieur.
La Figure 2 représente un contacteur électrique de puissance selon l'invention dans une première forme de réalisation.
La Figure 3 représente un contacteur électrique de puissance selon l'invention dans une seconde forme de réalisation.
La Figure 4 représente le contacteur de puissance dans la forme de réalisation de la Figure 2, dont une référence de potentiel de l'alimentation est reliée à un plan de masse général.

### DESCRIPTION DETAILLEE

La Figure 1 représente le schéma de câblage d'un contacteur 100 de l'art antérieur, classiquement utilisé dans un système électrique embarqué d'un aéronef.

Le contacteur de puissance 100 illustré ici est du type SPST - 2NO - 2NC. Il comprend :
- un boîtier mécanique 110 renfermant :
   ∘ un contact de puissance 111 Single Pole Single Throw comportant une première borne A1 et une seconde borne A2 ;
   ∘ quatre contacts auxiliaires 112, dont deux contacts auxiliaires « normalement ouverts » NO et deux contacts auxiliaires « normalement fermés » NC ;
   ∘ une bobine d'appel L2 susceptible d'être traversée par un courant d'appel et ou de maintien des contacts ;
   ∘ une bobine de maintien L1+L2 susceptible d'être traversée par un courant de maintien ;
- un contrôleur 120.

Le courant d'appel susceptible de traverser les bobines d'appel L2 et de maintien L1+L2 pour fermer le contact de puissance 111 est parfois dix fois supérieur au courant de maintien susceptible de traverser la bobine de maintien L1+L2 pour maintenir fermé ledit contact de puissance. Par exemple, le courant d'appel peut être de 4A, et le courant de maintien de 0,4A, ce qui justifie la mise en œuvre de deux bobines pour limiter la consommation électrique et l'échauffement sur de longues durées d'excitation du contacteur de puissance.

Ces caractéristiques d'un contacteur ne sont présentées ici qu'à titre d'exemple non limitatif d'un contacteur qui peut présenter plusieurs contacts de puissance, normalement ouverts ou normalement fermés, et un nombre différent de contacts secondaires normalement ouverts ou normalement fermés.

Le contacteur de puissance 100 présente :
- six bornes 1, 2, 5, 7, 9, 11 susceptibles d'être soumises à un potentiel Vdc, chacune étant associée de manière unique à l'une des bobines L1, L2 ou à l'un des contacts auxiliaires ;
- cinq bornes 3, 4, 6, 8 et 10 susceptibles d'être soumises à une référence de potentiel Odc, la borne 3 étant associée aux bobines, les autres bornes étant chacune associée de manière unique à un contact auxiliaire.

Les bornes 1 à 11 sont reliées électriquement et individuellement au contrôleur 120.

Le boîtier mécanique 110 contenant notamment les éléments de commutation, c'est-à-dire les bobines et les contacts auxiliaires, est également relié à une masse électrique 310 par un conducteur 113 de mise à la masse 310 de sorte à acheminer les courants de fuite et éviter une accumulation de charges électriques sur ledit boîtier mis en œuvre avec un blindage électromagnétique.

Le contrôleur 120 est quant à lui alimenté en tension par une alimentation électrique 300 présentant un potentiel d'alimentation +Vdc et une référence de potentiel 0Vdc.

On remarque en particulier que le contacteur de puissance 100 comprend six retours au potentiel de référence 0Vdc.

Ces caractéristiques du contacteur de l'art antérieur sont rappelées pour mieux mettre en évidence la configuration d'un contacteur de l'invention qui pour comparaison sera illustré avec des capacités équivalentes.

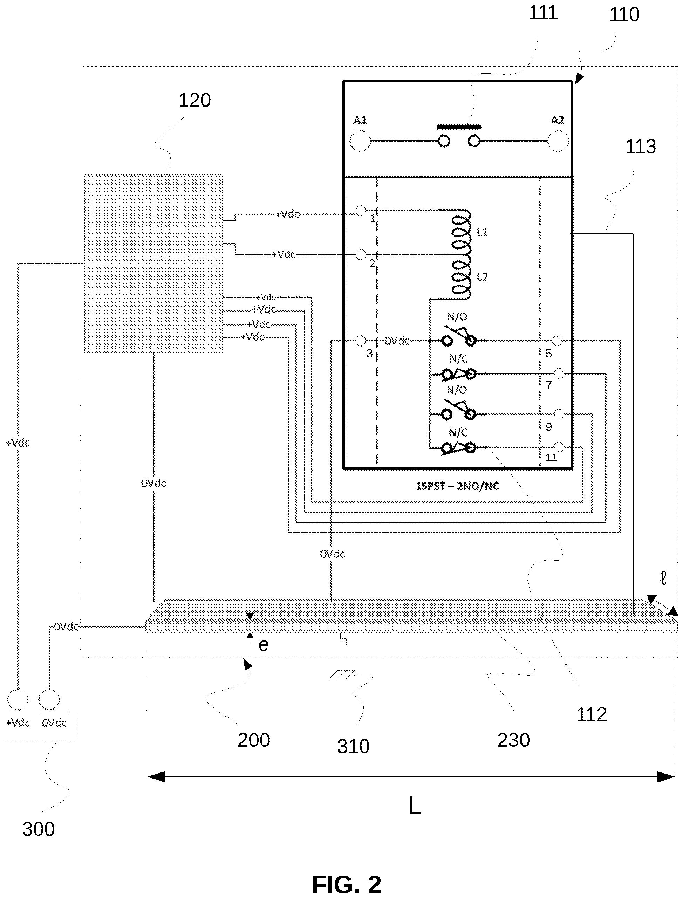

La Figure 2 représente un contacteur de puissance 200 selon l'invention. Il comprend :
- un boîtier mécanique 110 renfermant :
   ∘ un contact de puissance 111 SPST comportant une première borne A1 et une seconde borne A2 ;
   ∘ quatre contacts auxiliaires 112, dont deux contacts auxiliaires « normalement ouverts » NO et deux contacts auxiliaires « normalement fermés » NC ;
   ∘ une bobine d'appel L2 susceptible d'être traversée par un courant d'appel et ou de maintien des contacts ;
   ∘ une bobine de maintien L1+L2 susceptible d'être traversée par un courant de maintien ;
- un contrôleur 120 ; et
- un plan de masse électrique local 230 relié à une masse électrique 310 extérieure au contacteur de puissance 200.

Le plan de masse électrique local 230 est constitué d'un matériau électriquement bon conducteur, par exemple du cuivre.

Les connexions au potentiel de référence 0Vdc associées aux bobines L1, L2 et aux contacteurs auxiliaires du contacteur de puissance 200 sont regroupées, à l'intérieur du boîtier mécanique 110 dudit contacteur, au plus près des contacts auxiliaires et des bobines L1, L2 sur une unique borne de raccordement 3'.

Un unique conducteur commun, par exemple un câble électrique, est mis en œuvre pour relier la borne de raccordement 3' au plan de masse électrique local 230. Le contrôleur 120 et le boîtier mécanique 110 sont reliés indépendamment dudit conducteur commun audit plan de masse électrique local.

De par la disposition des éléments devant être reliés à la masse électrique locale, l'utilisation d'une tresse électrique comme masse électrique locale nécessiterait une tresse de longueur supérieure à 30cm. La résistance d'une tresse d'une telle longueur est trop importante pour que la tresse constitue un plan de masse électrique efficace.

Avantageusement, le plan de masse électrique local 230 a sensiblement la forme d'une plaque rectangulaire, d'épaisseur e minimale 0,1 mm et de préférence égale à 0,5mm, et de longueur L et de largeur ℓ telles qu'un ratio ℓ/L est supérieur à deux tiers et inférieur ou égal à 1. De manière préférée, la plaque est sensiblement carrée. De telles caractéristiques permettent d'obtenir une résistance, entre deux points quelconques du plan de masse électrique, suffisamment faible pour réduire le risque de perturbations par impédance commune lorsque plusieurs signaux partagent la même masse électrique de retour à un niveau compatible avec les exigences des équipements embarqués. L'utilisation d'une plaque au profit d'une tresse permet de limiter le nombre de connexions multi-contacts, évitant ainsi les augmentations de résistance électrique localement, aux points de connexion, et évitant également une dégradation de la fiabilité du système électrique.

En pratique, on entend par « résistance suffisamment faible » une résistance inférieure à 10µΩ, de préférence inférieure à 2µΩ. Pour obtenir une telle résistance, l'au moins un plan de masse électrique 230 pourra être constitué d'un matériau bon conducteur électrique, par exemple du cuivre. L'expression « matériau bon conducteur » doit être comprise dans le sens communément entendu par l'homme du métier des systèmes de distribution électrique de puissance. En général, un matériau ayant une résistivité inférieure à 10⁻⁶ Ω.m dans les conditions d'utilisation est considéré comme « bon conducteur ».

Avantageusement, le plan de masse électrique local 230 est situé au plus près du boîtier mécanique 110 et du contrôleur 120, de sorte à limiter la longueur des câbles utilisés, et donc leur poids. De préférence, l'agencement du plan de masse électrique local 230 est tel que les câbles conducteurs utilisés pour relier la borne de raccordement 3', le boîtier mécanique 110 et le contrôleur 120 ont une longueur inférieure à 30cm.

Dans une forme de réalisation non illustrée, le plan de masse électrique local 230 d'un contacteur selon l'invention peut servir de plan de masse électrique local 230 pour un autre contacteur 200 selon l'invention, en particulier dans l'environnement d'un meuble électrique comportant une pluralité de contacteurs électriques.

Dans l'exemple illustré, en regroupant ainsi les retours de courant du contacteur 200, le nombre de câbles utilisés est diminué de quatre, passant de :
- un câble utilisé initialement pour le raccordement des bobines au potentiel de référence ;
- quatre câbles utilisés initialement pour le raccordements des bornes des contacts auxiliaires au potentiel de référence 0Vdc ;
   à un seul et unique câble utilisé pour tous ces raccordements.

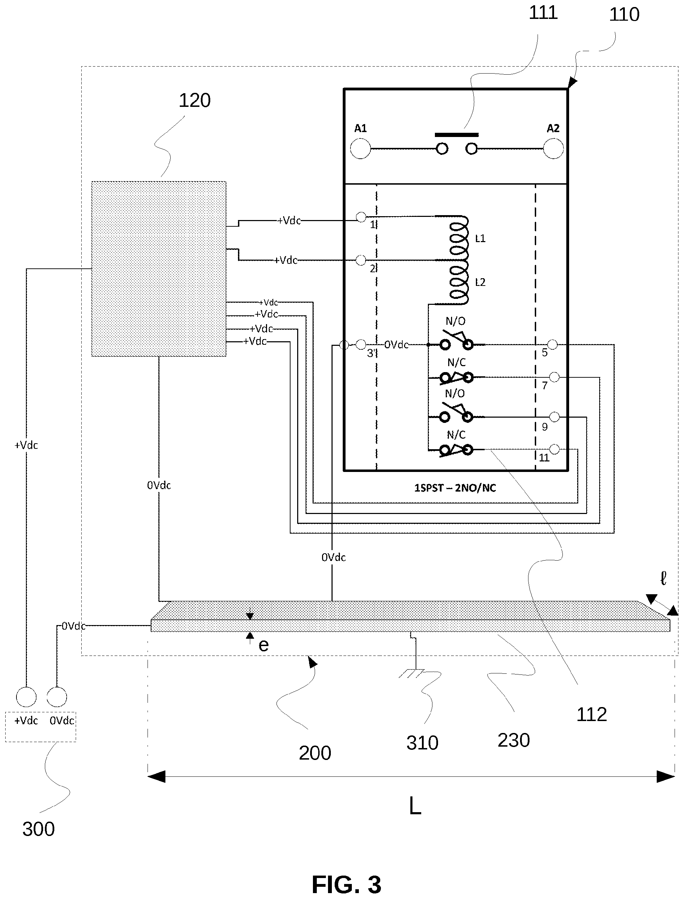

Dans une forme de réalisation illustrée sur la Figure 3 , l'unique conducteur commun mis en œuvre pour relier la borne de raccordement 3' au plan de masse électrique local 230 est également utilisé pour relier le boîtier mécanique 110 audit plan de masse électrique local.

L'ensemble selon l'invention permet donc le câblage interne du contacteur de puissance 200 en utilisant le plan de masse électrique local 230.

La limitation du nombre de câbles permet de limiter, d'environ 30% en pratique, le poids de câblage mis en œuvre dans le contacteur 200, et de minimiser les boucles de courant radiofréquences rayonnantes, réduisant ainsi les risques de couplage électromagnétique pouvant induire des dysfonctionnements du système électrique.

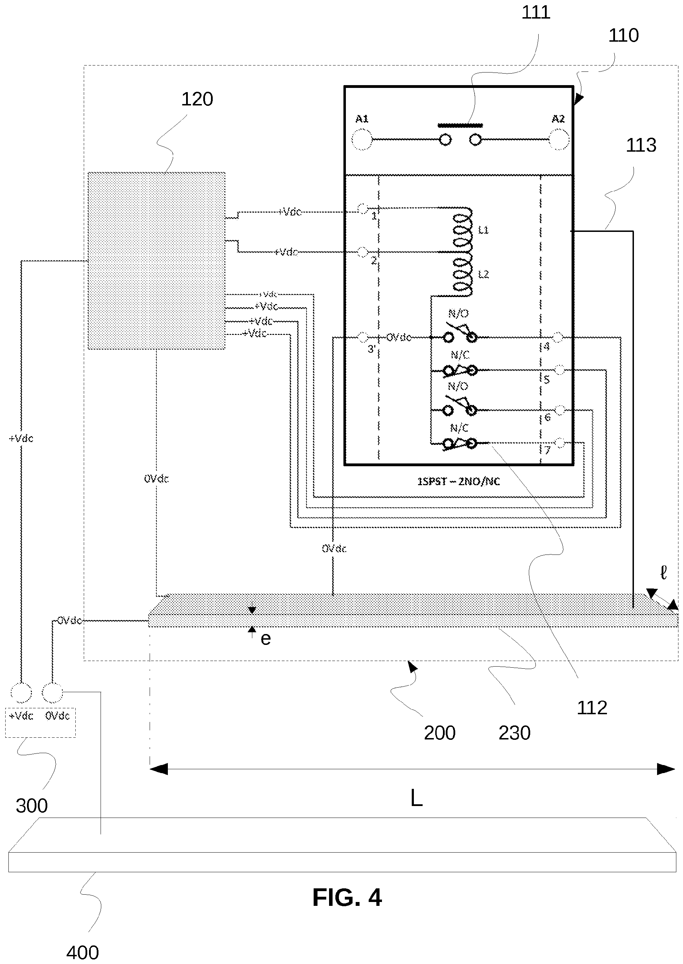

L'invention telle que décrite ici est adaptée à tout type de véhicule, et particulièrement à des aéronefs avec une structure majoritairement réalisée en matériaux composites. En effet, de tels avions sont munis d'un plan de masse électrique général 400 car les courants de fuite, toujours possibles, sont susceptibles d'endommager ladite structure. Le contacteur électrique de puissance 200 selon l'invention peut être mis en œuvre avantageusement dans un tel avion, dont le plan de masse électrique fait office de plan de masse électrique général 400 tel qu'illustré sur la Figure 4 auquel est rapporté le potentiel de référence du plan de masse local 230 via l'alimentation électrique 300. La masse électrique 310 de la forme de réalisation de la Figure 2 est ici avantageusement remplacée par le plan de masse électrique général 400.

Toutefois, il convient de noter que l'invention n'est pas limitée au seul domaine de l'aéronautique du mode de réalisation détaillé ici, mais pourra être adapté à d'autres domaines industriels tels que par exemple le domaine automobile.

## Revendications

1. Contacteur électrique de puissance (200) destiné à être connecté à une alimentation électrique (300) en courant continu entretenant une différence de potentiel entre une borne à un potentiel Vdc et une borne à un potentiel de référence OVdc, ledit contacteur électrique comportant :
- au moins une bobine (L1 ; L2) agencée pour actionner au moins un contact de puissance (111) ; et
- au moins un contrôleur (120) alimentant ladite au moins une bobine par une tension +Vdc fournie par l'alimentation électrique (300) ; et
- au moins un contact auxiliaire (112) actionné par ladite au moins une bobine, une borne dudit au moins un contact auxiliaire étant reliée à une entrée dudit contrôleur pour définir une tension sur ladite entrée ;
l'au moins un contact de puissance (111), l'au moins une bobine (L1 ; L2) et l'au moins un contact auxiliaire (112) étant renfermés dans un boîtier mécanique (110), ledit contacteur électrique de puissance étant **caractérisé en ce que** :
- le contacteur électrique de puissance (200) comporte en outre un plan de masse électrique local (230) destiné à être relié électriquement au potentiel de référence 0Vdc de l'alimentation électrique (300) et à une masse électrique (310) extérieure au contacteur électrique de puissance (200) ;
- des retours de courant de l'au moins une bobine (L1 ; L2) et de l'au moins un contact auxiliaire (112) sont réalisés par un conducteur commun relié audit plan de masse électrique local ;
- un retour de courant de l'au moins un contrôleur (120) est relié audit plan de masse électrique local.

2. Contacteur électrique de puissance (200) selon la revendication 1 **caractérisé en ce que** le boîtier mécanique (110) est relié au plan de masse électrique local (230) par un conducteur indépendant.

3. Contacteur électrique de puissance (200) selon la revendication 1 **caractérisé en ce que** le boîtier mécanique (110) est relié au plan de masse électrique local (230) par le conducteur commun reliant les retours de courant de l'au moins une bobine (L1 ; L2) et de l'au moins un contact auxiliaire audit plan de masse électrique local (230).

4. Contacteur électrique de puissance (200) selon l'une quelconque des revendications précédentes **caractérisé en ce qu'**une distance du plan de masse électrique local (230) à l'au moins un contrôleur (120) et une distance du plan de masse électrique local (230) à un boîtier mécanique (110) comprenant les éléments de commutation est inférieure ou égale à 30cm.

5. Contacteur électrique de puissance (200) selon l'une quelconque des revendications précédentes **caractérisé en ce que** la résistance entre deux points quelconques du plan de masse électrique local (230) est inférieure à 10µΩ, de préférence inférieure à 2µΩ.

6. Contacteur électrique de puissance (200) selon l'une quelconque des revendications précédentes **caractérisé en ce que** le plan de masse électrique local (230) est une plaque rectangulaire d'un matériau de résistivité inférieure ou égale à 10⁻⁶ Ω.m, d'épaisseur e supérieure ou égale à 0,10mm, de préférence égale à 0,5mm, et dont un rapport ℓ/L d'une largeur ℓ de plaque sur une longueur L de plaque est supérieur ou égal à 2/3 et inférieur ou égal à 1.

7. Contacteur électrique de puissance (200) selon la revendication 6 **caractérisé en ce que** le plan de masse électrique local (230) a une forme sensiblement carrée.

8. Aéronef comportant au moins un contacteur électrique de puissance (200) selon l'une quelconque des revendications précédentes.

9. Aéronef selon la revendication 8 comportant en outre un plan de masse électrique général (400) en charge des retours de courant de l'aéronef et auquel le plan de masse électrique local (230) de l'au moins un contacteur de puissance (200) est relié.

## Patentansprüche

1. Elektrisches Leistungsschütz (200) zur Verbindung mit einer Gleichstromversorgung (300) die eine Potentialdifferenz zwischen einem Anschluss mit einem Potential Vdc und einem Anschluss mit einem Referenzpotential 0Vdc aufrechterhält, wobei das elektrische Schütz Folgendes aufweist:
- mindestens eine Spule (L1; L2) die angeordnet ist, mindestens einen Leistungskontakt (111) zu betätigen; und
- mindestens eine Steuerung (120), die die mindestens eine Spule mit einer Spannung +Vdc versorgt, die von der Stromversorgung (300) bereitgestellt wird; und
- mindestens einen Hilfskontakt (112), der durch die mindestens eine Spule betätigt wird, wobei ein Anschluss des mindestens einen Hilfskontakts mit einem Eingang der Steuerung verbunden ist, um eine Spannung an dem Eingang zu definieren;
wobei der mindestens eine Leistungskontakt (111), die mindestens eine Spule (L1; L2) und der mindestens eine Hilfskontakt (112) in einem mechanischen Gehäuse (110) eingeschlossen sind, wobei das elektrische Schütz **dadurch gekennzeichnet ist, dass**:
- das elektrische Leistungsschütz (200) ferner eine lokale elektrische Massefläche (230) aufweist, die dazu bestimmt ist, mit dem Referenzpotential 0Vdc der Stromversorgung (300) und einer elektrischen Masse (310), die sich außerhalb des elektrischen Leistungsschützes (200) befindet, elektrisch verbunden zu sein;
- Stromrückführungen von der mindestens einen Spule (L1; L2) und dem mindestens einen Hilfskontakt (112) durch einen gemeinsamen Leiter realisiert sind, der mit der lokalen elektrischen Massefläche verbunden ist;
- eine Stromrückführung von der mindestens einen Steuerung (120) mit der lokalen elektrischen Massefläche verbunden ist.

2. Elektrisches Leistungsschütz (200) nach Anspruch 1, **dadurch gekennzeichnet, dass** das mechanische Gehäuse (110) durch einen unabhängigen Leiter mit der lokalen elektrischen Massefläche (230) verbunden ist.

3. Elektrisches Leistungsschütz (200) nach Anspruch 1 **dadurch gekennzeichnet, dass** das mechanische Gehäuse (110) durch den gemeinsamen Leiter mit der lokalen elektrischen Massefläche (230) verbunden ist, der die Stromrückführungen von der mindestens einen Spule (L1; L2) und von dem mindestens einen Hilfskontakt mit der lokalen elektrischen Massefläche (230) verbindet.

4. Elektrisches Leistungsschütz (200) nach einem der vorhergehenden Ansprüche, **dadurch gekennzeichnet, dass** ein Abstand von der lokalen elektrischen Massefläche (230) zu der mindestens einen Steuerung (120) und ein Abstand von der lokalen elektrischen Massefläche (230) zu einem mechanischen Gehäuse (110), das die Schaltelemente umfasst, kleiner als oder gleich 30 cm ist.

5. Elektrisches Leistungsschütz (200) nach einem der vorhergehenden Ansprüche, **dadurch gekennzeichnet, dass** der Widerstand zwischen zwei beliebigen Punkten der lokalen elektrischen Massefläche (230) weniger als 10 µΩ, vorzugsweise weniger als 2 µΩ beträgt.

6. Elektrisches Leistungsschütz (200) nach einem der vorhergehenden Ansprüche, **dadurch gekennzeichnet, dass** die lokale elektrische Massefläche (230) eine rechteckige Platte aus einem Material mit einer Resistivität kleiner als oder gleich 10⁻⁶ Ω.m, einer Dicke e größer als oder gleich 0,10 mm, vorzugsweise gleich à 0,5mm ist, und wovon ein Verhältnis ℓ/L einer Plattenbreite ℓ zu einer Plattenlänge L größer als oder gleich 2/3 und kleiner als oder gleich 1 ist.

7. Elektrisches Leistungsschütz (200) nach Anspruch 6, **dadurch gekennzeichnet, dass** die lokale elektrische Massefläche (230) eine im Wesentlichen quadratische Form aufweist.

8. Luftfahrzeug aufweisend mindestens ein elektrisches Leistungsschütz (200) nach einem der vorhergehenden Ansprüche.

9. Luftfahrzeug nach Anspruch 8, ferner aufweisend eine allgemeine elektrische Massefläche (400), die für die Stromrückführungen des Luftfahrzeugs zuständig sind, und mit der die lokale elektrische Massefläche (230) des mindestens einen Leistungsschützes (200) verbunden ist.

## Claims

1. Electrical power contactor (200) intended to be connected to a DC electrical power supply (300) maintaining a difference in potential between a terminal at a potential Vdc and a terminal at a reference potential 0Vdc, said electrical contractor including:
- at least one coil (L1 ; L2) arranged to actuate at least one power contact (111); and
- at least one controller (120) supplying said at least one coil with a voltage +Vdc delivered by the electrical power supply (300); and
- at least one auxiliary contact (112) actuated by said at least one coil, a terminal of said at least one auxiliary contact being connected to an input of said controller so as to define a voltage on said input;
the at least one power contact (111), the at least one coil (L1 ; L2) and the at least one auxiliary contact (112) being enclosed in a mechanical housing (110), said electrical power contactor being **characterized in that**:
- the electrical power contactor (200) further includes a local electrical ground plane (230) intended to be electrically connected to the reference potential OVdc of the electrical power supply (300) and to an electrical ground (310) outside the electrical power contactor (200);
- current returns from the at least one coil (L1 ; L2) and from the at least one auxiliary contact (112) are formed by a common conductor that is connected to said local electrical ground plane;
- a current return from the at least one controller (120) is connected to said local electrical ground plane.

2. Electrical power contactor (200) according to Claim 1, **characterized in that** the mechanical housing (110) is connected to the local electrical ground plane (230) by an independent conductor.

3. Electrical power contactor (200) according to Claim 1, **characterized in that** the mechanical housing (110) is connected to the local electrical ground plane (230) by the common conductor connecting the current returns from the at least one coil (L1 ; L2) and from the at least one auxiliary contact to said local electrical ground plane (230).

4. Electrical power contactor (200) according to any one of the preceding claims, **characterized in that** a distance from the local electrical ground plane (230) to the at least one controller (120) and a distance from the local electrical ground plane (230) to a mechanical housing (110) comprising the switching elements is shorter than or equal to 30 cm.

5. Electrical power contactor (200) according to any one of the preceding claims, **characterized in that** the resistance between any two points on the local electrical ground plane (230) is lower than 10 µΩ, preferably lower than 2 µΩ.

6. Electrical power contactor (200) according to any one of the preceding claims, **characterized in that** the local electrical ground plane (230) is a rectangular plate of a material having a resistivity that is lower than or equal to 10⁻⁶ Ω.m, a thickness e that is greater than or equal to 0.10 mm, preferably equal to 0.5 mm, and a ratio ℓ/L of a plate width ℓ to a plate length L of which is higher than or equal to 2/3 and lower than or equal to 1.

7. Electrical power contactor (200) according to Claim 6, **characterized in that** the local electrical ground plane (230) is substantially square in shape.

8. Aircraft including at least one electrical power contactor (200) according to any one of the preceding claims.

9. Aircraft according to Claim 8, further including a general electrical ground plane (400) responsible for the current returns for the aircraft and to which the local electrical ground plane (230) of the at least one power contactor (200) is connected.
